# EUROPEAN PATENT APPLICATION

(11) **EP 1 983 453 A1**
(43) Date of publication of application: **22.10.2008**
(21) Application number: 08380118.3
(22) Date of filing: 18.04.2008
(51) Int. Cl.: G06F 17/30

(54) **Method, device and program for personal information management**

(30) Priority: 19.04.2007 ES 200701054 P
(71) Applicant: Telefonica, S.A., 28013 Madrid (ES)
(72) Inventor: Garijo Mazario, Francisco Javier, 28013 Madrid (ES); Sanchez Sanchez, Jose, 28013 Madrid (ES); Jurado Apruzzese, Susana, 28013 Madrid (ES)
(74) Representative: Carpintero Lopez, Francisco

(57) **Abstract**

Method for managing information relating to a person, comprising: a stage of storing at least one item, wherein said stage of storing comprises in turn the following step: selecting an item which is to be saved; characterized by the additional steps of: assigning to said item one or several identifying markers, wherein said markers are based on the human mind operation model; saving said item together with its marker or markers; obtaining a key associated to the item to subsequently retrieve said item. Device for managing information relating to a person and a computer program.

## Description

### FIELD OF THE INVENTION

The present invention is applicable to the field of information management, which information relates to an individual. More specifically, the present invention is applicable to digital personal content management and personal and social relationships on the Network.

### BACKGROUND OF THE INVENTION

Currently, in a full-fledged information society, more information is generated every second than any human being could process in all his or her life. This information is evidently unstructured, unorganized and highly incoherent. Internet search engines appeared in the 1990s to organize access to the information. The problem that they attempted to solve was how to find the information located on the network. Search engines are tools allowing the user to find a document containing a certain word or phrase. Basically two approaches arose to solve the problem: directory-based search engines or search robots or spiders.

Search robots or engines or spiders conduct the search by key words, following the links of the pages that they index in their database, and calculate the importance of each page according to how many others are linked to it. Directory-based search engines in turn conduct searches by thematic indexes or hierarchical categories. Since search engines operate automatically, they generally contain more information than directories. However, the latter must also be constructed from (non-automated) searches or from warnings given by the creators of pages (which can be very limiting). Good directories combine both systems.

There are also other types of search engines, such as mixed search engine-directory systems, metasearch engines, free links for everyone, portal search engines or vertical search engines.

The complexity of information was already evident in the year 2000 in personal computers, therefore the first search engines appeared in the PC field. The information in our own computer is sufficiently "unorganized" so as to need a search engine that can find what is sought, either in the mail, or in the innumerable directories that are created. These search engines are installed in a personal computer, generally by means of a toolbar that can be accessed from the browser.

Search engines are also known which can restrict the search to a particular Web, which are very useful when the information is known to be located in a certain portal, but not where.

Search engines and the way of organizing information are currently aimed mainly at the content of the information (i.e., what it is). The search and organization are according to the content. Thus, when a search is conducted on the Web or in a personal computer, the search is conducted by terms such as "financial report", "Football results of this or that team...", etc.

To facilitate information location, there are applications and services which allow adding tags to the information, explaining what their content is. However, these tags are designed to add information to what is being saved and additional comments. Therefore, these tags determine what can be found at the time of retrieving and sharing information.

Information must generally be stored under a certain criterion or order, such that the information can be subsequently retrieved by means of a specific search algorithm or the most suitable heuristics. The problem that arises is that personal criteria with respect to current tools change as people change. Information is sometimes saved in temporary directories or according to a social group. As a result, it is later virtually impossible to retrieve the desired information.

The social network concept is subjacent to the individual, all of us form part of a group of friends, a community, a neighborhood, a football team or a nation. However, the social network has increased enormously since the appearance and popularization of Internet. Mainly due to the appearance of virtual communities, the latter have grown exponentially together with the deployment of Internet and the generalization of its tools, e-mail, chat, instant messaging, etc. With the prospect of virtual communities, the individual increases his or her relationship capacity, his or her social network, with entities with similar tastes, trends, beliefs, etc. The virtual community concept is so well-accepted that today, any new innovation on the Internet measures its success in proportion to the network it draws around it. Internet messaging or applications allowing its users to keep their contact agenda up to date are emphasized among this type of applications.

### SUMMARY OF THE INVENTION

The object of the present invention is to solve the aforementioned problems derived from conventional information storage criteria.

Without tools, all the information received and generated by a person exceeds him or her and degenerates into data that cannot be assimilated. Just like the senses filter the innumerable sensations of the natural world, a device and method for personal information management, which information belongs to an individual, particularly to his or her digital personalities, is needed which aids such individual with the excess of digital information.

One of the aspects of the present invention relates to a method for managing information relating to a person, comprising: a stage of storing at least one item, in which said stage of storing in turn comprises the following step: selecting an item which is to be saved; characterized by the additional steps of: assigning to said item one or several identifying annotations or markers; in which said markers are based on the human mind operation model; saving said item together with its marker or markers; obtaining a key associated to the item to subsequently retrieve said item.

The stage of storing preferably further comprises the step of: indexing the item from said key.

The method preferably further comprises a stage of searching for information, in which said stage of searching for information in turn comprises the following steps: defining at least one filter of the information which is to be sought; performing a search based on said information filter; obtaining at least one item as a result of the search. Said at least one item obtained as a result of the search is preferably obtained from a key that said item has associated thereto.

The items are preferably chosen from the group consisting of: text document, presentation, music, audio, audioconference, e-mail, video, film, videoconference, photograph, image, scanned document, spreadsheet, short messages, database, webpage (URL), blog, forum, digital signature, contact (which can be an organization or a person), interaction (understood as any type of interaction that the user has had with a person through any communication means, even oral, and of which he or she wants to keep a record, storing data such as the date on which it occurred, the detail of the exchanged information, etc.).

The different stages are preferably carried out by managing agents and specialist agents.

Each identifying marker is one of the following types: biographical, emotional, security or social marker.

In another aspect of the present invention, a device for managing information relating to a person is provided, comprising: means for storing at least one item, which means in turn comprise: means for selecting an item which to be saved, characterized by; means for assigning to said item one or several identifying markers (patterns which allow defining the annotations or tags), in which said markers are based on the human mind operation model; means for saving said item together with its together with its marker or markers; means for obtaining a key associated to the item to subsequently retrieve said item.

The device is independent of the communication means, network or channel used (UMTS, WiFi, etc.).

The device of the present invention allows storing and retrieving all the user's information relating to his or her digital life. Security is furthermore assured by means of implementing the recommendations contemplated in different standards such as the Liberty Alliance standard, including a group of standards for defining processes and use which allow anonymously sharing digital identities. A confidence circle is thus defined as the virtual relationship between users provided by a Liberty identity provider, ensuring certain privacy and security levels while sharing information between services to members of said circle. A federation of identities is defined as a group of identities associated to a Liberty identity provider which, therefore, belong to the same confidence circle and the identity of which can be anonymously shared among them. The device therefore allows managing the personalities of the individual in the network, controlling the factors and data determining his or her self-presentation. The user can determine which information about him or herself he or she wants to provide, depending on the time and the situation in which he or she is located.

To that end, the device of the present invention is based on a marker model, through which the information is saved favoring search mechanisms which have been defined according to the behavior of human memory. Thus, the emotional component which each information unit exerts on an individual is taken into account while displaying the results of each search or evocation of his or her digital memories. Thus, while conventional search engines are based on the content (the "what") of the information, the present invention provides a device taking into account the emotional weight of certain information.

A final aspect of the present invention relates to a computer program comprising program code means adapted to carry out the stages of the previous method, when said program is run in a microcontroller, in a digital signal processor or in a computer information network.

The invention takes into account the following aspects: the human emotional component, over the information and the software; the new technological progress by applying it to the psychosocial field; and the idea that Digital Me (YO DIGITAL^{™}) is the basic part for social interaction on the Network.

The invention therefore enables an individual to be the person he or she is, but also the one he or she wants to be on the Network by means of the easy and secure management of his or her digital personalities.

The device and the method can manage the information emotionally in the same way as a human being does because they learn from both the information provided by the user and from the environment. The invention therefore provides a personal assistant who evolves and adapts to the tastes and preferences of the user.

### BRIEF DESCRIPTION OF THE DRAWINGS

For the purpose of aiding to better understand the features of the invention according to a preferred practical embodiment thereof and to complement this description, a set of illustrative and non-limiting drawings is attached as an integral part thereof. In these drawings:
Figure 1 shows the model on which the information management device and method of the present invention is based.
Figure 2 shows the architecture of the Digital Me application of the present invention.
Figure 3 shows the marker model of the present invention.
Figure 4 shows a scheme of how to add a new item to the Digital Me application by means of the marker model of the present invention.
Figure 5 shows a scheme of how to conduct a search in Digital Me according to the present invention.
Figure 6 shows the affective valence scale according to the marker model of the present invention.
Figure 7 shows the activation level scale according to the marker model of the present invention.

### DETAILED DESCRIPTION OF THE INVENTION

The following definitions must be taken into account in the context of the present invention:
The term "digital" must be understood as being related to the electronic format. The term "digital life" relates to the information of the life of a person provided in electronic format; "digital personality" relates to the personality features of a person provided in electronic format and "digital memories" relate to the memories that a person saves in electronic format.
"Digital Me" is a set of agents and resources including all the digital information or information in electronic format that a person has. Therefore, the "personal me" comprises all the digital information that a person has, whereas the "social me" comprises only information that can be shared.
An "agent" is defined as a software entity with a robust and adaptable architecture that can function in different computational platforms or and can carry out in an "intelligent" and autonomous manner different objectives by exchanging information with the environment, or with other human or computational agents. The characteristics of the behavior of an agent to be stressed are: continuous and autonomous operation; communication with the environment and with other agents (possibly humans) by means of a communication formalism or language; robustness; adaptability as the ability to perform objectives and tasks in different domains in an incremental and flexible manner.
An "intelligent agent" is any agent that can reason and learn.

Another characteristic that agents can have is mobility. Mobile agents can move between the nodes of a network and be executed in different platforms.

A marker is also defined as a tag which can be added to an information unit, whether it is an item type or contact type (as is explained below) to aid in its search. In the context of the present invention, a marker acts as a memory activation key.

Also in the context of the present invention "item" is defined as information that can be managed independently. Examples of items are a photograph, a document, a video, a short message, an invoice, an e-mail, a url resource locator, etc.

Furthermore, reference to the Network must be understood as Internet.

Furthermore, throughout this specification, the term "comprises" and its derivatives should not be interpreted in an exclusive or limiting sense, i.e. it should not be interpreted so as to exclude the possibility that the element or concept it refers to includes additional elements or steps.

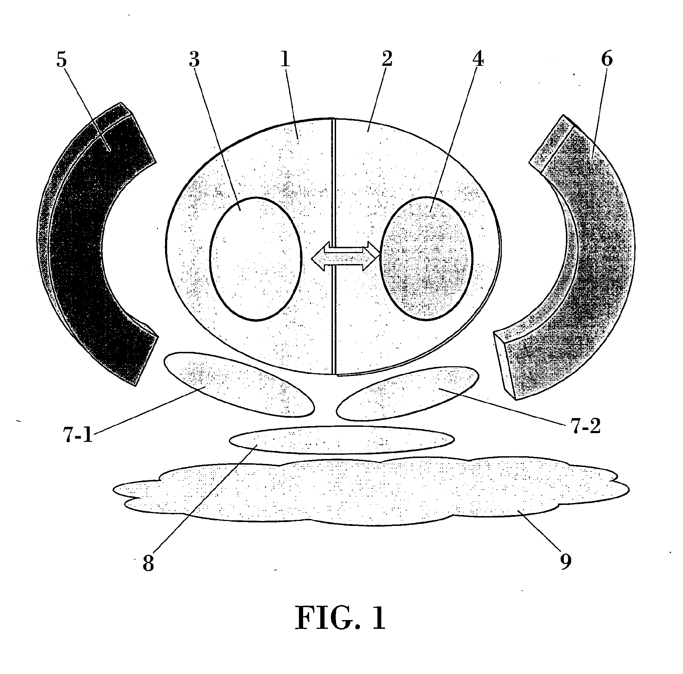

The information management device and method of the present invention is based on the model shown in Figure 1. This model is based on the operating scheme of the human memory.

As can be seen in Figure 1, the main components forming the marker model on which the present invention is based are as follows:
- The "personal me" (1), which is the "me" that one constructs for himself or herself and represents the integrity of the person and the emotional experiences of the individual, such as his or her memories (3).
- The "social me" (2), corresponding to the social interrelationships taking place in the individual's life, such as the relationships with people (4).
- Intelligent agents (7-1, 7-2, 8), which can be internal (7-1, 7-2) or external (8). The internal intelligent agents (7-1, 7-2), i.e. which relate to the actual digital me, make it possible for the information management device and method to be secure (5) and to communicate regardless (6) of the device and of the channel, network or medium. The external intelligent agents (8) allow the device and method to communicate (interact and learn) with the outside world (9), such as Internet, and provide to it the security necessary for that purpose.

The architecture of Digital Me shown in Figure 1 is based on a marker model allowing it to store, retrieve and display the information based on the operation of the human memory, unlike known tools which search for information based on individual, merely descriptive words.

According to psychological studies, the human memory can retrieve information according to keys which activate information retrieval in the memory. The human memory uses a series of classification criteria, which can be of the following types:
- emotional: the information is classified according to the emotional state evoking or suggesting: sadness, love, joy, indifference, disdain, fear, etc.
- evaluative: the information is classified according to if it is good, bad, useful, useless, etc.
- autobiographical: the information is classified according to the person's life period: childhood, adolescence, adulthood, etc.
- social: the information is classified according to who can access it or use it.
- operative: the information is classified according to what can be done with it.

The present invention structures and typifies these keys, thus defining the different types of markers forming the conceptual marker model defined for Digital Me. Phrases such as "when I was in college", "to get my driver's license", "work context ", "my role as a partner", "I am happy", "my college friends", etc. activate a person's memory and brings to mind a set of memories related to that key. The Digital Me of the present invention does the same thing, i.e. it uses more human or emotional, and not merely descriptive, memory activation keys.

These markers make it possible for the user to be able to add his or her personal tags to the information, taking into account the moment, the emotions, the social context the individual is in, etc.

The information management method and device of the present invention is based on four ways of presenting two functional blocks (a management block and a display block):
1) The information belonging to the user or "MY MEMORY": allows the user to manage all of his or her information, registering it, providing other supplementary information relating to his or her life experience (using the annotations made based on the marker model), modifying the already entered information and conducting searches of already existing information.
2) The information a user receives related to other people or "MY PEOPLE": allows the user to manage all the information related to his or her social network, registering it, providing other supplementary information relating to his or her life experience (using the annotations made based on the marker model), modifying the already entered information and conducting searches of already existing contacts.
3) The user's memories or "MY EMOTIONS": allows the user to see his or her previously stored memories in the form of emotional maps.
4) The events occurring in the user's life or "MY LIFE": allows the user to manage his or her autobiographical accounts, automatically organized in registers, such as books and chapters.

The invention allows the retrieval of all the user's information related to his or her digital life and his or her personalities in the network. In other words, it can determine what information itself is what the user wants to provide at all times, in every context and to every person.

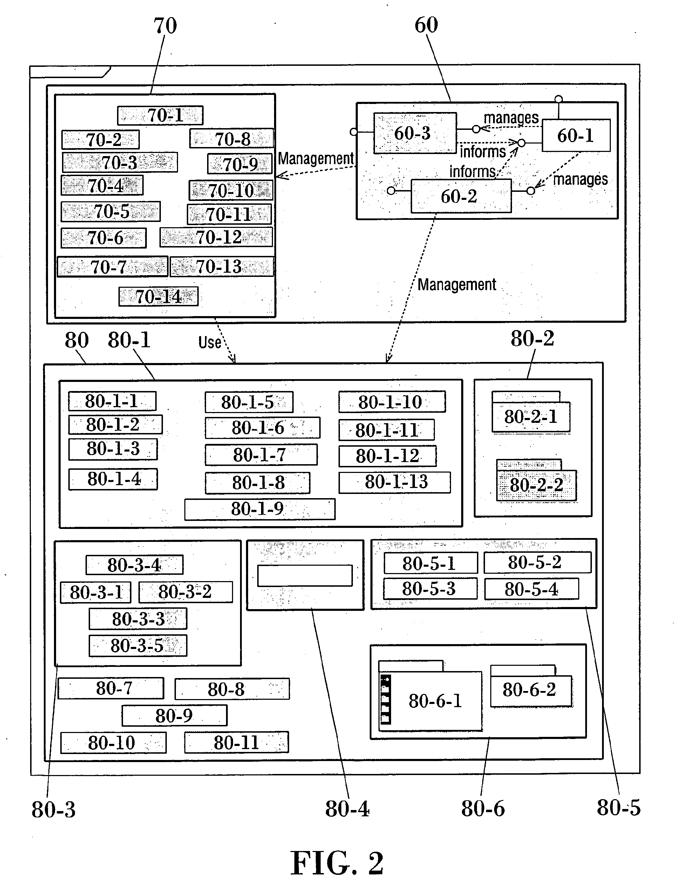

The architecture of the system of the present invention is based on an agent organization working together to carry out the application or functionality of Digital Me. This architecture is shown in Figure 2. The agent organization modeling Digital Me is formed by several software components, which have an external vision and a uniform internal structure. These software components are managing agents, specialist agents and several categories of resources. As previously stated, the agents are computational entities (software) implementing the processes necessary to carry out a specific objective or to provide a service to the user.

The agents and resources offer two types of interfaces:
- Management interface: provides methods to activate, stop, eliminate and monitor the components. All the components of the architecture shown in Figure 2, both the agents and the resources described below, have a management interface and a use interface.
- Use interface: provides the operations necessary for agent-agent, agent-resource and resource-agent communication.

The internal structure of the agents is formed by the subsystems necessary for performing information perception-control-assimilation cycles and actuation. There is a wide variety of agent models according to the control perception and actuation characteristics. The agents used in Digital Me are modeled by means of finite state machines which obtain and process the information through the resources of the organization.

The resources represent autonomous computational entities located in the computational environment of the agents -information servers, communications subsystems, databases, etc. The internal structure of the resources depends on their functionality. A resource can be a commercial product, a library or a component belonging to Digital Me. Integration into the architecture is carried out by means of a coating pattern implementing the use and management interfaces.

The general architecture of the system is defined in Figure 2, in which the managing agents are represented by means of reference number 60, the specialist agents by means of reference number 70 and the resources by means of reference number 80.

The managing agents 60 are responsible for the management tasks of the specialist agents 70 and of the resources 80 of the organization. The tasks of a managing agent 60 consist of the start, the supervision, the error control and decision making when failures occur in the managed elements.

The organization has a hierarchical structure, headed by an organization managing agent 60-1, which is responsible for the start, creation, supervision and termination of the Digital Me application, but it does so by working with other two managing agents 60, the resource managing agent 60-2 and the agent managing agent 60-3. The latter (60-2, 60-3) in turn report to the organization managing agent 60-1 and receive commands from it, but they have the responsibility of creating, starting and supervising the resources 80 of the organization or the specialist agents 70.

When a failure occurs in a managing agent 60 or in a specialist agent 70 it is reported to its corresponding managing agent, which analyzes the failure and makes the appropriate decision, which can consist of informing the user, disabling the agent or the resource in which the failure occurs, or closing the application, indicating to the user the cause of such failure.

The functionality of the Digital Me application is carried out by the specialist agents 70 by means of the resources 80 of the organization. Examples of specialist agents 70 are a Digital Me control agent 70-1, a My People control agent 70-2, a Personality Test control agent 70-3, a Contact control agent 70-4, a Group Area control agent 70-5, a Social Network control agent 70-6, a User Information control agent 70-7, a My Memory control agent 70-8, a Search agent 70-9, an Ego control agent 70-10, an Annotation control agent 70-11, an Annotation Modification control agent 70-12, a Presentations control agent 70-13 and a Security control agent 70-14.

Some of the agents are described below:
Digital Me control agent (70-1): this is the agent responsible for controlling and coordinating the main window of Digital Me. It incorporates the register of which of the four main screens is being shown (my memory, my life, my people and my emotions), and it controls the transition from one view to another. It further coordinates the search of items and the control of the markers and the option of exiting the application.
Personality Test control agent (70-3): this is the agent responsible for coordinating the screens and the actions related to the personality test. It commands that the screens with the questions be shown to the user as he or she responds to them and commands that the results be saved.
Contact control agent (70-4): this is the agent responsible for the control and coordination related to the management of the contacts, from requesting the data of a contact, to commanding the classification, creation, modification and elimination. It also controls the validation of the data forming a contact.
Group Area control agent (70-5): this agent coordinates the management of the presentations and of the areas and the groups. It manages the menus in which the management of these elements, i.e. the creation, modification and elimination of groups and areas, is allowed.
Social Network control agent (70-6): this agent is responsible for coordinating the social network. It controls the management of the contacts forming the social network of a user, including the ego of the user (initial contact). It coordinates the appearance of the screens necessary for management.
User Information control agent (70-7): this is the agent responsible for coordinating the screens which allow editing the text messages forming the application. It allows saving from simple messages to messages formed by different alternatives.
My Memory control agent (70-8): this agent is responsible for coordinating the display of the items that the user has and the search for same.
Search agent (70-9): This is the agent responsible for controlling and coordinating the searches that the user performs in Digital Me. It controls the indexes introduced for the search.
Ego control agent (70-10): This agent controls and coordinates and the edition of the Ego of the user of Digital Me. It checks if the Ego is defined and coordinates the screens which are shown to the user so that the user can complete the data, whether for creating or modifying the Ego. It also controls the validation of the data entered by the user and the storage of same.
Annotation control agent (70-11): This is the agent responsible for coordinating the actions necessary for adding annotations to the items, creating new annotated items, retrieving items and validating the annotations whether they are of the items themselves and of their descriptions.
Annotation modification control agent (70-12): This agent coordinates the actions involved in modifying the annotations of an item, from the presentation of the necessary screens to the validation of the annotations.
Presentations control agent (70-13): This agent is responsible for coordinating the actions related to the different presentations related to the contacts (including the Ego), interactions with the contacts, details of the different presentations and the groups and areas of the user.
Security control agent (70-14): This agent coordinates the actions related to the security of Digital Me; these actions control that the privileges necessary for carrying out the desired actions are obtained.

These examples must not be considered as limiting but rather merely illustrative.

The agents implement the functions defined in the blocks of Figure 1. For example, the agents involved in the information annotation and the search process implement the functions associated with "My memory" (3). The agents involved in the social network implement the functions associated with "My people" (4).

The "My memory" and "My people" model is a psychological model. The agents model is the computational model that implements it.

The agents 60, 70 represented in Figure 2 give an idea as to the functions that the Digital Me application can implement. If the Digital Me control agent 70-1 is taken as an example, this agent has the responsibility of providing the user with the main functions of Digital Me and interpreting what the user wants to do. To that end it has access to the resources 80 of the application.

The resources 80 can be clustered into several groups: display resources 80-1, information resources 80-2, persistence resources 80-3, search resources 80-4, validation resources 80-5, organization infrastructure resources 80-6, etc.

The display resources 80-1 allow the agents to communicate with the user and to receive his or her requests. They comprise, among others, Digital Me Control display resources 80-1-1, My Memory display resources 80-1-2, Ego display resources 80-1-3, My State display resources 80-1-4, My People display resources 80-1-5, Annotation Management display resources 80-1-6, User Message display resources 80-1-7, Social Network display resources 80-1-8, User Information Management display resources 80-1-9, Group Area display resources 80-1-10, Contact display resources 80-1-11, My Memory display resources 80-1-12, Presentations display resources 80-1-13, etc.

My Memory display resource (80-1-2): This resource contains methods related to the management and display of the items. Methods for activating actions to add, modify and eliminate items, to open them, search for them and present them.

Ego display resource (80-1-3): The Ego display resource offer methods related to the handling of the user's Ego. It contains methods for showing the Ego window in the event that the user has not completed the data or wants to modify them, methods for activating the saving of the data and for activating the validation of same.

My State display resource (80-1-4): This resource offers methods for obtaining and establishing the current state of the user of Digital Me.

Annotation management display resource (80-1-6): it contains all the windows forming the process of editing the annotation of the different items, including the process of managing the markers. The methods forming this resource open and close the necessary windows in consideration of the methods executed by the corresponding control agent.

User Message display resource (80-1-7): This resource contains methods which can be used to inform the user of events, whether they are the news, warnings or errors.

Social Network display resource (80-1-8): The methods forming this resource allow interacting with the graphic part of the social network created by the user. They are used to activate the validation of the network components and to offer the user information of same.

User Information Management display resource (80-1-9): This resource contains the windows forming part of the management of the written messages appearing in Digital Me. Editing messages and informing of possible editing failures is allowed with this interface.

Group Area display resource (80-1-10): The Group Area display resource contains the windows related to the area and group management and methods for changing these interfaces by creating, modifying and eliminating groups and areas.

Contact display resource (80-1-11): This resource contains the window which is shown when contact information is to be entered or modified. It also contains methods controlling the behavior of the window and activating the validation of the entered data.

Presentation display resource (80-1-13): This resource is formed by the window used as the interface for the presentations of a contact and of the methods which are used so that the corresponding control agent interacts with this interface.

The information resources 80-2 allow the agents to interpret the requests and execute them. The most representative entities of "My memory" (80-2-1) are the items with the possibility of activating the search for same, whereas the most representative entities of "My people" (80-2-2) are the presentations, the ego and the contacts 80-2-2, etc.

The persistence resources 80-3 allow storing the information in databases so as to have it available when it is needed. They comprise, among others, Session Information Safeguard resources 80-3-1, Social Network persistence resources 80-3-2, User Information resources 80-3-3, social network storage resources 80-3-4, Digital Me persistence resources 80-3-5, etc.

Session Information Safeguard persistence resource 80-3-1: This persistence resource saves information relating to the current session of the user of Digital Me. This information is necessary only during use and does not have to be saved permanently.

Social Network persistence resource 80-3-2: The social network persistence resource contains the methods necessary for loading the data related to the social network, saving it and also for generating and loading a backup of same.

User information resource 80-3-3: This resource saves and retrieves all the text messages presented in Digital Me.

Digital Me persistence resource 80-3-5: The persistence resource offers methods of saving and of loading in the database all those control agents that have to permanently save information. This information includes items, annotations, annotated items, personality test results. It also offers backup methods.

The validation resources 80-5 comprise, among others, Item validation resources 80-5-1, Presentation Validation resources 80-5-2, Ego Validation resources 80-5-3, Contact Validation resources 80-5-4, etc.

Item validation 80-5-1: This resource contains the method which allows checking the validity of an item that the user wants to save in his or her Digital Me.

Presentation Validation 80-5-2: This resource contains the methods necessary for checking the validity of all the data entered in the creation or modification of the presentation of a contact. It checks the validity of the personal data, the physical data, the communication data and the location data.

Ego Validation 80-5-3: This resource allows checking the validity of the personal data, physical data, contact data and location data entered in the Ego of the user of Digital Me.

Contact Validation 80-5-4: This resource offers methods for checking the validity of the personal data, physical data, contact data and location data of a contact either when it is created or when the already existing data of same are modified.

The organization infrastructure resources 80-6 comprise, among others, infrastructure resources 80-6-1 and trace resources 80-6-2.

Other resources are storage resources (Deepamehta) 80-7, group area suggestion resources 80-8, arrangement resources 80-9, trace resources 80-10 and interface repository resources 80-11.

The Digital Me control agent 70-1 receives the requests from the user, processes them and as a result decides if it will resolve them itself or if it will delegate them to other agents. The first task of this agent 70-1 is to command the displayer to show the Digital Me control window. When the user pushes a specific button, the display resource 80-1 interprets it as a request which is sent to the agent 70-1. If the user pushes the "My memory" button, the Digital Me control agent 70-1 receives an event sent by the display resource 80-1-2 in which it tells it that the user wants to work with the functionality related to "My memory". The agent 70-1 decides that it cannot do this and sends the request to the My Memory control agent 70-8, which is responsible for interpreting the user's request.

The My Memory control agent 70-8 is responsible for providing the user with the functionality related to the Digital Me annotation management, to that end it also works with other agents such as the Annotations control agent 70-11, the search agent 70-9, the area and group management agent 70-5 and others.

The present invention allows adding new agents or resources to the architecture, therefore the system easily evolves. Changing the functionality of the agents or resources or eliminating them can affect the agents or resources they are related to. Nevertheless, when errors occur, the entities that sustain them detect them and have the mechanisms necessary for indicating them to the managers, which take the appropriate actions.

The device and method of the invention optionally allow permanent dialogue with the user: it informs the user of events, actuations performed with the social network, etc. However it further allows the user to interact with it, asking questions, for example.

The device and method of the invention also allow configuring the information management of the user and different aspects related to the graphic user interface. It also allows querying the user as to its personality, likes, etc. The user interface is adapted depending on the results of this query, improving aspects related to the applications and use of the tool.

The device and method take into account the state the user is in at all times, since it can, for example, read from the person's agenda where he or she is at all times and associate that situation (for example, "work") with an emotional component (for example, "satisfaction"). The information corresponding with that state is thus presented to the user, simulating the functioning of operative human memory.

To carry out the management of personal information of a user, the Digital Me application stores two types of information units: items and contacts. Examples of items are photographs, files, resource locators (url, Uniform Resource Locator); examples of contacts are people (together with their personal information n, contact data, physical data about the person, details about his or her personality, etc.) or agencies or organizations, such as the Treasury Department (in which contact information for this agency or organization would be available). These examples are merely illustrative and non-limiting. The information units of the "contact" type comprise an agenda together with the record of interaction with the piece of data included in the agenda.

To annotate information units, for example items, the application uses a Digital Me marker model forming part of the present invention and described below.

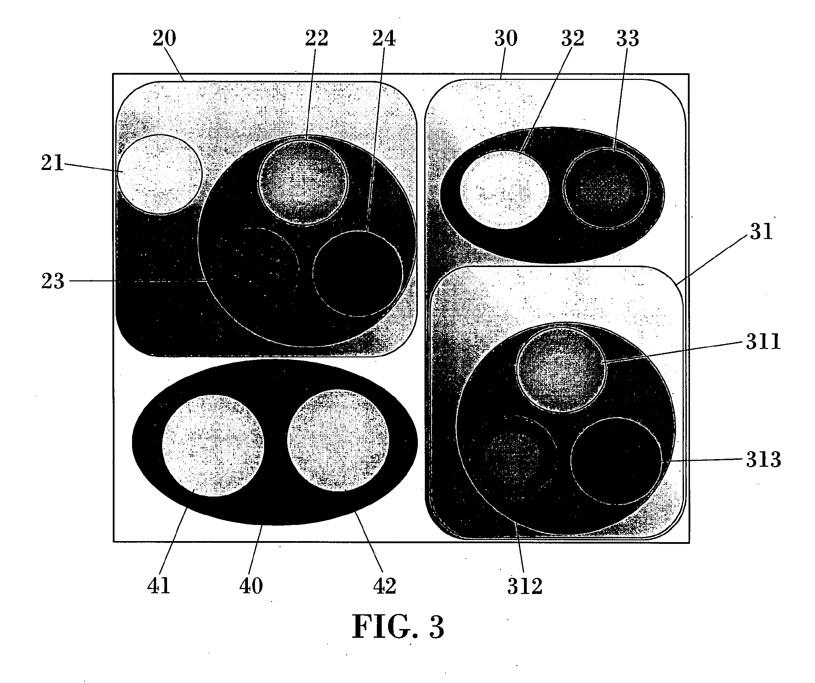

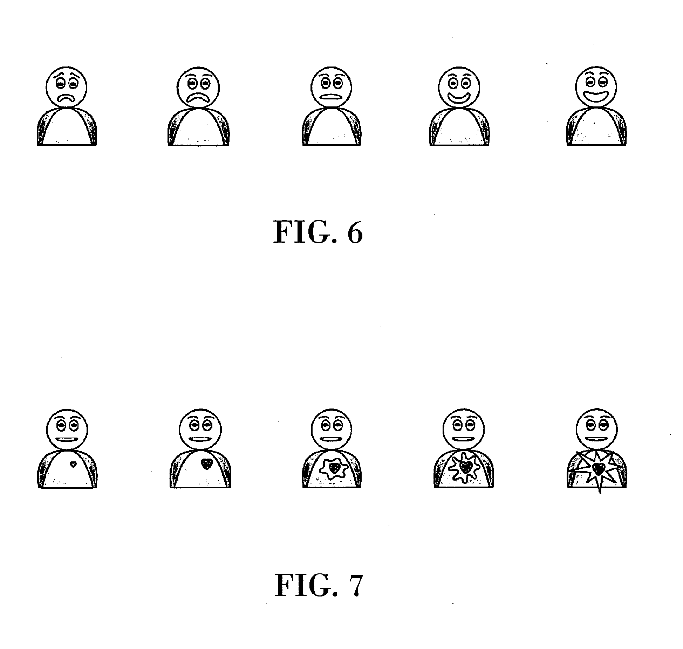

Figure 3 represents the marker model of the present invention. The marker model, annotations or tags comprises three main types of markers: information unit (items or contacts) markers (20), user markers (30) and security markers (40).
1) The information unit (items or contacts) markers (20) allow saving information units enriched by means of annotations of the following types:
   - "What Is" item marker (21), including, for example, the following types: text document, presentation, music, audio, audioconference, video, movie, videoconference, photograph, image, scanned document, spreadsheet, database, Website, blog, forum, digital signature, contact, organization, person, interaction. The "What Is" item marker is mandatory. It should be noted that the difference between the item marker model and the contact marker model is that in the contact marker model it makes no sense to refer to a "what is" type marker because it is a contact.
   - item marker "Description", in which the user expresses in free text what he or she wants to say about the item, "Autobiographical" item markers (22), which allow the temporary trace to the item, since the memories are linked together in narrative sequences. There can be several types, such as thematic types ("when"), which describe the moment associated to the item, or teleological types ("for"), which describe the purpose. It is an optional marker.
   - "emotional" item markers (23), which allow associating the emotional trace, since memories in the human mind have an emotional fabric. They are optional markers. They can be simple type or composite type markers:
      Simple: "textual", "emoticons" or the own images of the user "morphs" to express emotions (joy, sadness, surprise, repugnance, anger, fear, etc.); "colors", as there are people who associate colors to their emotions (for example, black when they are sad); "music", as there are people who associate music to their emotions (for example, a rumba when they are happy).
      Composite: "affective valence", defining up to which point the user likes or dislikes the item, and a scale from 0 to 9 is used or the scale is shown with icons, as is shown in Figure 6; "activation level", defining up to which point the item affects or does not affect the user; and a scale from 0 to 9 is used or the scale can also be shown with icons, as is shown in Figure 7.
   - social item markers (24), which allow associating the social trace, since memories are located in social interaction scenarios. They are optional markers. There may be several types, such as:
      area, referring to the area which the item is associated to. Examples of areas are: personal, familiar, work, official or virtual; examples of subareas comprised in an area are: partner, health, nutrition/aesthetics, economy, friendship and leisure/relax (within the "personal" context); family unit and extensive family (within the "family" context; training, projects and planning (within the "work" context); Public Administration-Healthcare, Contribution Public Administration; Justice Public Administration, political activity and labor union activity (within the "official" context); forum, chat, on-line games, blog (within the "virtual" context). The user can subscribe to other subareas within an area. role, referring to the role of the user associated to the item (for example, the role of parent, subordinate, sibling, friend, partner, etc.) social group, referring to the social group which the item is associated to (for example, college friends, colleagues, etc.).
      When the user annotates an item with the marker values which are associated thereto, he or she can choose as many values as he or she wishes to assign. He or she is also allowed to include new values to those contemplated initially.
      In the marker model, the types of item markers and those of contact are identical, with the exception that it is not logical to refer to a "what is" type marker in those of contact.
2) User markers (30) allow the device and method of the invention to adapt to the personal characteristics of each user; his or her personality, his or her environment, his or her preferences. These markers are used to search for information that is consistent with the state of the person and to adapt the user interface to the personality of each user.
   - state markers (31): are used to define the state in which the user is located and thanks to such markers, the operative memory mechanism is formed (the human memory knowledge system selects the information related to the demands of the task being carried out at that time), by the consistency between the state markers (31) and the item markers (20). They allow adapting the personal characteristics of each user such that if, for example, the context of the user is a work contact, the information shown by default is that corresponding to his or her work environment. The taxonomy of the state markers (31) is a replica of the item markers (20), except for the "What is" (21) and "Description" markers (for which there is no parallelism in the case of the user). In other words, there are autobiographical state markers (311), emotional state markers (312) and social state markers (313).
   - personality markers (32). They indicate the personality of the user; the usability and appearance of the interface adapt to the preferences of the user; the user shows a greater tendency to use some item markers over others. For this reason, the device and method of the present invention can first offer those markers, even suggesting values for them. In the method and device of the present invention, the personality of the user is defined based on five factors (emotional stability, extroversion, openness, cordiality and responsibility), broken down into 30 facets (6 facets per factor) which are the following: sociable, creative, tidy, confident, stable, vital, curious, disciplined, honest, with emotional control, assertive, prone to fantasizing, persistent, altruistic, calm, adventurous, liberal, with a sense of duty, conciliatory, moody, emotion seeker, tolerant, competent, modest, with impulse control, dominant, attracted by novelty, meticulous, empathetic and optimistic. There are 3 different types of characteristics defining the personality for each factor, according to whether their score is high, medium or low in the average facet assessment. Once the interrogation of the user has ended, the personality report is generated based on 3 specimen paragraphs for each factor (or group of 6 facets) and according to their score in each of them.
   - life cycle markers (33): There are 5 life cycle marker value available in the system to define the stage of the cycle in which the user is located: childhood, adolescence, youth, adult age, the usability and the appearance of the system interface adapts to the preferences of the user and the user shows a greater tendency to use some item markers over others. For this reason, the system can first offer those markers, even suggesting values for them.
3) Security markers (40):
   - access control markers (41). The three levels existing in the system are: low (the item can be viewed by anyone), medium (in which a confidentiality aimed at context (medium by context), at social group (medium by social group) or at combinations of both can be indicated) and high (the item is only to be displayed in the personal context and under a strict validation of the user). In the medium by context level, the item is subject to restrictions of display by context. The item will only be displayed when its context marker value is consistent with the current state of the user. In the medium by social group level, the item is subject to restrictions of display by social group, i.e., it can be indicated which people or social groups can view the item. The manner of indicating it can be inclusion or exclusion. In other words, the user can indicate which people or social groups can view the item or which people or social groups are the only ones who cannot view the item. The encrypted information can be stored in any of the three cases (low, medium, high) if the user indicates it. And in the case of high confidentiality, the encrypted storage mode of the information is offered by default.
   - confidentiality markers (42), in which aspects related to DRM ("Digital Right Management") are contemplated: item modification, copyright and publication license, etc.

As indicated above, the information management device and method of the present invention is based on four ways of presenting two functional blocks (a management block and a display block): 1) the information belonging to the user or "MY MEMORY"; 2) the information received by a user related to other people or "MY PEOPLE"; 3) the user's memories or "MY EMOTIONS"; 4) the events occurring in the user's life or "MY LIFE".

The relationship between each of these four elements and the marker model set forth above is then described.

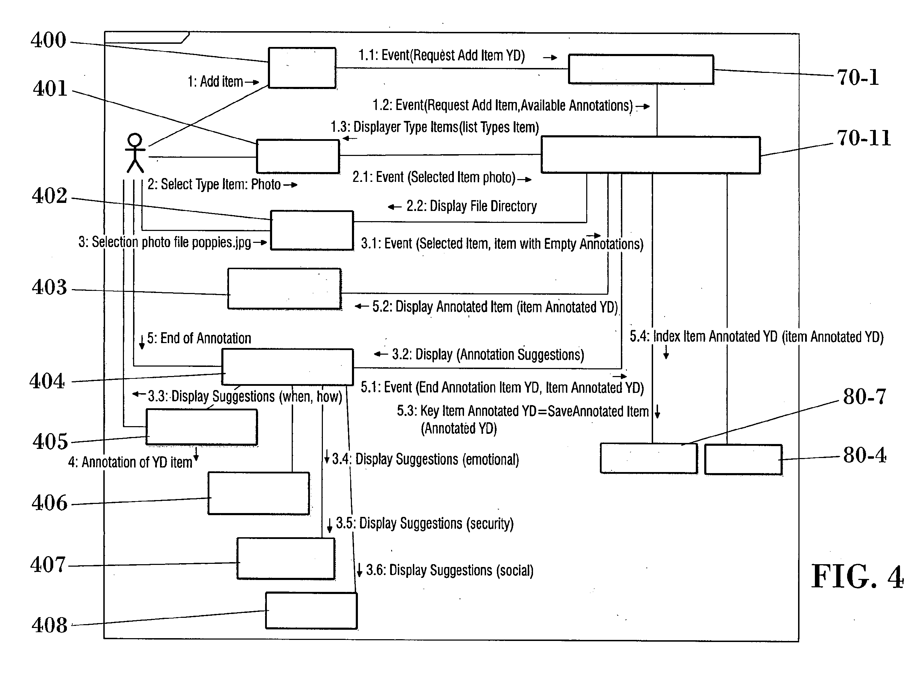

Regarding the information belonging to the user or "MY MEMORY", this marker model which has just been described is used to provide the method and device of the invention with the necessary functionality to acquire information from the life experience from the user in the storage and retrieval of information. The marker model thus allows capturing marker values whereby the user wishes to annotate and enrich his or her digital information. The user is thus allowed to introduce one or several items at the same time and add the annotations he or she considers relevant based on the defined marker model. These annotations are stored together with the item and enable the process of retrieving the information to simulate the human memory operation. The way to add a new item (for example, photograph, document, video, short message, invoice, e-mail...) to the Digital Me application is describe below. This process is shown in Figure 4 and contemplates the following stages:
- Selecting an item which is to be added or saved;
- Annotating the item in the Digital Me application using the Digital Me marker model;
- Saving the annotated item in the memory of the application.

The user first selects the corresponding button through the input/output interface 400 of the application, which preferably is the main window of Digital Me. An event is thus sent to the Digital Me control agent 70-1, indicating that a new item is to be added. Once the Digital Me control agent 70-1 has received the event, it sends it in turn to the annotation control agent 70-11 so that, through the input/output interface 401, i.e., a window for selecting the type of item, it shows the user the window in which the type of item to be added can be selected. Upon selecting the type of item, an event is sent to the annotation control agent 70-11 with the type of item that the user has selected, a photograph for example. The annotation control agent 70-11 then shows an item display window 402. Each display resource can have one or several display windows (My Memory display window 403, Annotation display window 404) which are useful for Digital Me to present information to the user and so that the latter can in turn communicate with Digital Me entering requests, commands or different types of information which will be processed by Digital Me to show a file directory, for example, and for the user to select the item he or she wished to add. When the user selects the item, an event is sent to the annotation agent 70-11 with the selected item and indicating if it has or has not the associated annotations. Once the annotation agent 70-11 receives it, it indicates the annotation displayer 404 to show suggestions for annotating the item. The suggestions are possible marker or annotation values which are provided together with the application by way of example (for example, college friends, fellow football team members, etc. can be considered as suggestions for social groups). The annotation displayer 404 shows through the input/output interface a series of windows for the interaction with the user. In a particular embodiment, the following windows are shown:
An autobiographical annotation window 405, in which suggestions for "when", "for" type annotations, etc. are displayed;
An emotional annotation window 406, in which suggestions for "emotional" type annotations are shown;
A security annotation window 407 to show suggestions for the "security" type annotation;
A social annotation window 408 with suggestions for the "social" type annotation;

The process of annotating the item is included in the following scenario.

At the time the user ends the item annotation in the annotation displayer, the latter sends an event to the annotation control agent 70-11 to indicate the end of the item annotation and to send it the already annotated item. The annotation control agent 70-11 uses the persistence resource of the social network 80-3-2 to store the annotated item. The persistence resource stores the item and returns an identifier or key to be able to subsequently retrieve or modify it. Once stored, it sends the annotated item to a search resource (for example, "Lucene") 80-4 so that it indexes it. A new item has thus been created and stored in Digital Me.

While retrieving the information, the method and device of the invention attempt to reproduce the processes of the human memory knowledge system. Thus, to retrieve the information related to the current moment of the person, the operation of the process of retrieving the operative or associative memory is reproduced, which selects the information related to the demands of the task that the individual is carrying out. When dealing with more complex memory searches, which are not directly related to the current moment, an interference engine is used to deduce the information that has to be retrieved. An interference engine is a computer system which allows obtaining new information from existing information using logic rules (interference rules, such as for example: if A is part of B and B is part of C then A is part of C).

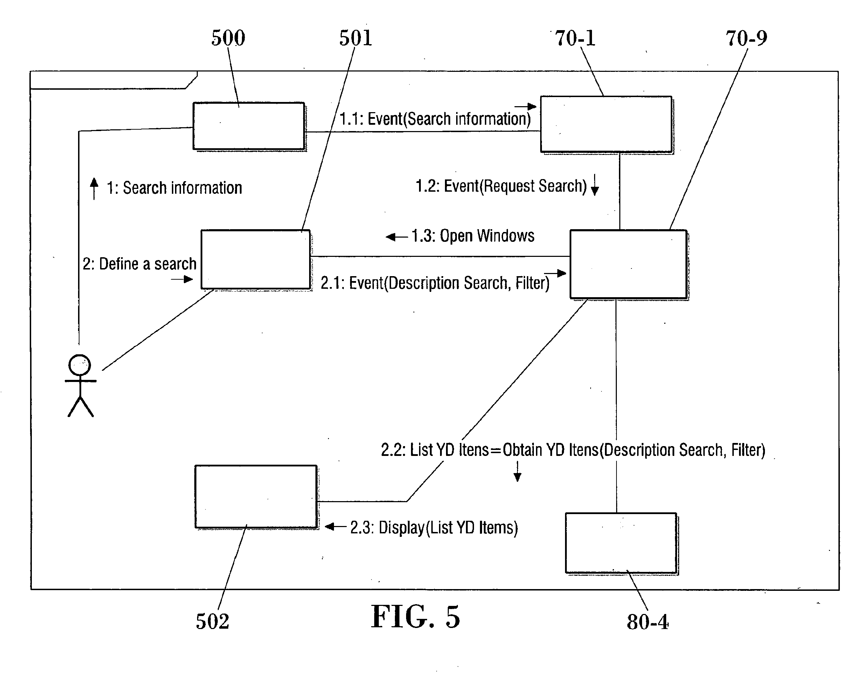

The application of the present invention allows a user to conduct a search in his or her Digital Me. This is shown in Figure 5. The user can conduct semantic searches in natural language, by annotation value and if desired, filtering by the state he or she is in.

To conduct a search in his or her Digital Me, the user must select that he or she wishes to conduct a search through the input/output interface 500 This input/output interface 500 is preferably the main window of Digital Me. An event is thus sent to the Digital Me control agent 70-1 informing it that a search is to be conducted. The Digital Me control agent 70-1 sends an event to the search control agent 70-9 with a search request, causing the search control agent 70-9 to show a search window 501 in which the user must define what he or she wants to search and the filters through which he or she wishes to pass the search results. To conduct a search, the user can do so by free text as he or she would do in any search engine or by making use of the marker model. In this second case there are two options, searching by specific marker values (for example context=work, social group =project x, what is=presentations). The other option is to search by consistency with the current state of the person/user (for example, if the person is happy, in the family context, with the Avila cousins social group, he or she can select to search everything related to this situation he or she is in).

When the user finishes defining the search he or she wishes to conduct through the search window 501, an event is sent to the search control agent 70-9 with the description of the search defined by the user and the selected filter. With this data the search control agent 70-9 makes a request to the search resource 80-4, for example, "Lucene", to obtain a list of items as a result. It then shows the resulting list in a search result window 502.

When the user receives the information from "My memory", for example through the screen of the device, if the number of items which are to be presented is greater than a predetermined number, limited by the size of the screen, for example, the items are grouped applying a specific criterion. The following are examples of criteria (in the established order):
1. By the "What is" marker value (21) and applying conjunction to the annotation values (i.e., that they coincide with the remaining annotation values of the items).
2. By the "What is" marker value (21) grouped by context.
3. By the "What is" marker value (21).
4. By the context marker value.
5. By annotation conjunction. Combining annotation values by conjunction thereof (i.e., those having a specific number of annotation values in common will be in one and the same group), starting from the highest to lowest value conjunction/coincidence level (i.e., it will be attempted that the items of one and the same group have the greatest possible number of annotation values in common).
6. By simple markers. A grouping by each existing marker value.
7. Social marker (or) disjunction. In the event of the existence of an abundance of social marker values, these are combined by disjunction (a group would be formed by items having annotation value x or the value z).
8. By semantic characteristics: By a semantic analyzer of the content of the items: text indexers; By psychophysical patterns, for example detecting common pixelations in photographs, etc.
9. Other types of information of the items, such as date and time consistency (with dynamic parameters that would be established depending on the case, with groupings by months, weeks, days, hours, half-hours, etc.).

The implemented grouping algorithm attempts to apply the first criterion, if the number of groupings of items which is to be presented is still higher than that admitted by the size of the screen, the following criterion is applied. And in any of the cases, there may be an "Other" category comprising the items that do not fit into the significant categories.

While providing the items or the groupings thereof, for example by means of their presentation in the screen of the device, the order in which they appear follows the following criteria:

For the items:
1. When the user has conducted the search of the items by consistency with some of the user state marker values, which markers are chosen by the user himself or herself, those that are consistent with the state markers which are kept inactive in the search are shown first. The system discriminates because the user has selected, through the search tools, the values he or she wants to use in each search. The filters must coincide with the marker values that the user has selected.
2. The frequency of use.
3. The recentness of the item (the more recent it is, the sooner it appears).
4. Other criteria: Alphabetical order or file size (where appropriate). For the groupings:
   1. When the user has conducted the search of the items by consistency with some of the user state marker values, the groupings that are consistent with the state markers that are kept inactive in the search are shown first.
   2. By annotation density/intensity, on average per item, i.e., on average how many annotation values within the group there are per item.
   3. By date, taking the date of the most recent item (from inside the grouping).
   4. By frequency (of the most frequent item from inside the grouping).

The following criteria are applied to arrange the items which are to be presented once they are within the corresponding grouping:
- If the search is conducted by operative memory (that related to the state the user is in at that time): the consistency by emotional marker, i.e., the item the emotional annotation value of which coincides with the emotional state in which the user is located, has a higher score.
- If the search is conducted by certain annotation values or semantically: the consistency by autobiographical marker, i.e., the item the "when" or "for" annotation values of which coincide with the state the user is in.

According to the arrangement criterion described above, the items or groupings are presented, if the presentation is by a screen, in circumference or list form, according to the choice of the user. In the case of the circumference, the item or grouping appearing at the center is the first according to the arrangement criteria and the remaining items or groupings move away from the center as this ordered list is run through. For the list, the item or grouping that appears first is the fist one according to the arrangement criteria and the remaining items or groupings are then placed according to the ordered list.

In a particular embodiment, the user must create an "Ego" in the first run of the Digital Me application. The "Ego" is the first contact of the social network, the center thereof and represents the proprietor/user of Digital Me.

The contact control agent 70-4 makes a contact creation window be shown through the input/output interface, by a screen for example, so that the user can introduce the minimum data necessary to create his or her Ego. When the user introduces the personal data, an event is sent to the contact control agent 70-4 with this data. The contact control agent 70-4 uses the contact information data validation resource 80-5-4. If there is an error, the user is notified through an error notification window, so that he or she can correct and re-enter the data which will be validated again. If the data is correct, an event is sent to the contact control agent 70-4, indicating that the data is correct. The contact control agent 70-4 then obtains a notification for the user, using the user notification message resource 80-1-7, to inform the user that the data is correct.

When the user indicates that the process of inserting data has ended, an event is sent to the contact control agent 70-4, informing of the end of the Ego data creation, once it receives this event, the contact control agent 70-4 in turn sends an event to the social network control agent 70-6 so that it creates and Ego node and also sends the Ego information entered by the user. The social network control agent 70-6, upon receiving the event, uses a storage resource (Deepamehta) 80-7, to save the Ego node which has just been created. The first node of the social network has thus been created and stored.

Initially, when the user accesses the "My memory" 3 element for the first time, i.e., when the user starts up his or her Digital Me for the first time and accesses the My Memory 3 functionality for the first time, the access of which can occur, for example, in a non-limiting manner, by selecting the corresponding screen in the device, the items which are shown to him or her are consistent with the state the user is in at that time. Such that, if he or she is at work and carrying out tasks for a certain project X, the "My memory" element provides him or her by default with all the information related to his "context=work" and "for="for project X".

Regarding the information received by a user related to other people or "MY PEOPLE" 4, in any process of interaction, the human being is placed as a nucleus from which a network of contacts (people or institutions) is configured, defining a social network formed by those contacts to which the user is related. That social network belongs to the proprietor. According to the current state (emotional, autobiographical and social) of the user, the social network that is consistent with the user is presented to him or her. When any type of communication is set up between two contacts of a social network through a application or medium, an interaction occurs between said contacts.

In an embodiment of the present invention, in one of these interactions each contact can offer his or her presentation card. For example, if the interaction occurs between two people, that interaction will have the presentation of the user, the presentation that the second person says he or she has and the presentation perceived by the user of the second person (it is a way of adding his or her own comments with respect to that person). A presentation card can comprise: personal data; physical data; of personality data; a context; a social group; a role; a photograph. The information can be real of fictitious (for example, if it is a character invented for an on-line game, it will be a fictitious presentation card). In other words, one and the same user can adopt different personal data, physical data, personality data, context, social group, role and/or photograph according to the situation which he or she is in.

Furthermore, information can be exchanged in an interaction, such as for example the personal or personality data are included in the exchanged presentation cards or documents, which can in turn be items, with or without physical support. In this case, it must be added whether the exchanged information is sent, received or shared.

The contacts and interactions are treated as items and therefore, annotations can be incorporated thereto in the same manner as to the items.

Different types of relationships between the contacts can be represented, and the user is allowed to name said relationships if desired. The following attributes are available in a relationship: frequency, which is calculated from the number of interactions maintained with the contact; affectivity, which is calculated from the emotional annotations of the interactions associated to the contact.

A relationship between two contacts can be shown in different areas, and in this case, they can be displayed with different descriptions.

Likewise, the social network makes use of the centrality concept represented by the number of views of the social network in which a contact appears, i.e., the "amount of presence" of a contact within the social network of an individual. For example, Ana is a person which appears in the work social network of a user because she is a colleague, but also in his or her college friend social network because he or she studied with her, and in the family social network familiar because she married the proprietor's brother and is his or her sister-in-law. According to the marker model, 3 types of centrality are formed which can be displayed in the different views of the social network: autobiographical, emotional and social.

The autobiographical and emotional centrality values are presented in association with the corresponding names of the markers assigned to the contact/node of the social network. Therefore, a centrality value of each type is calculated for each contact of the social network.

Through the "My people" 4 functionality, the user can display the complete or partial social network (for example, he or she can select to see only that related to his or her "work" context or to his or her "college friends" social group). When the social network or part of it is displayed, he or she can display for each node (contact) thereof: the presentation cards (of the user which are exchanged with the contact in the interactions, of the contact which are used in the interactions; perceived by the user about the contact), the interactions which the contact has maintained with the user; the information (items) related to the contact (in which this relationship between the item and the contact may have been formed by: security restrictions (for example, it is a person who is allowed to access the item), file exchanges through interactions (for example, the item corresponds to a photograph which was sent by e-mail), social annotations (for example, the person belongs to the social group associated to the item)); his or her personal information; his or her physical description; his or her location data; his or her communication data; the annotations added to the contact by the user.

Therefore, from his or her social network, the user can effectively manage: the information associated to the contacts that the user has; the information exchanged with the contacts; the management of his or her personalities in the network (controlling his or her self-presentation; determining and controlling the information about himself or herself provided at all times, in each context and to each person).

Regarding the user's memories or "MY EMOTIONS", an emotional map is shown in coordinate axes, which the user can display on a screen for example: the y-axis shows the activation level and the x-axis shows the affective valence. The emotional maps allow the user to consciously access his or her emotional world, which so affects his or her predisposition to action and his or her personal relationships.

The emotional maps are built based on the emotional annotations of the items. The user can request his or her emotional map: by chronological period (for example, that of last week); by autobiographical markers (for example, that of "when he or she was in college"); by social markers (for example that of the "work" environment

Regarding the events occurring in the user's life or "MY LIFE", people narrate their life by relating past/present/future to make adaptive decisions and to give consistency and meaning to their life. In one embodiment of the present invention, books or albums are constructed with the autobiographical accounts of the user, i.e., autobiographies (books, albums) are constructed from the autobiographical marking (when/for) and from the social context marking (work/ family /personal /etc.). For example: "My work life", "My family life", "My personal life", etc.

A book covers all the narrative periods of the user for a certain role, emotion, group, context/subcontext marker value. Each book is divided into chapters, comprising the items associated with a specific autobiographical marker value.

The method and device of the present invention are furthermore able to learn and evolve with the user to: automate and facilitate the annotation of the items; adapt to the tastes and needs of the user: evolve with the user and with the changes occurring throughout his or her life.

To that end, the definition of initial behavior rules based on statistical data and on the personality of the user is used for starting from.

Thus, (from his or her personality, from the relevance analysis provided by the present invention (the items which are similar in content are expected to be annotated in a similar manner), from browsing analysis (based on the creation of a user profile using both recent history and a wide history of the places through which the user has browsed) and from similar persons ("fellow people" or "mentors") forming part of the social network of the user (the close network (acquaintances, friends, etc.), the extensive network (the entire Internet), other digital "me"s) are learnt from the user himself or herself.

The method and device allow evolving according to the acceptance and rejection that the user carries out on the suggestions of the invention according to what has been learned up until now, according to the modifications made by the user at any time, according to the changes observed in the "fellow people" and "mentors" of the social network of the user.

According to their acceptance, rejection or refining, the adaptation and evolution of the rules defining the behavior of the method and device of the invention occur.

When the user is well known, the method and device can make suggestions not only about the annotations of the items, but warn the user that his favorite singer will give a concert or that the book he or she was waiting for is available in the stores, becoming a personal assistant, for example.

The method of the present invention is integrated with the most popular Web tools, such as: YouTube, Flickr, Del.icio.us, etc. Furthermore, to simplify the processes of digital interaction with the people or entities of the social network, it is integrated with tools such as e-mail or instant messaging. The device or tool thus becomes a single tool which allows accessing all the applications, as well as controlling and managing at all times which of his or her digital information is accessible for the rest of the world, where it is and who has access thereto.

Finally, the present invention can be applied to the fields related to the management of personal digital content, social networks and the personal relationships on the Network.

Examples of these applications are: as an efficient manager of the information associated with the digital life and of the personalities on the network, facilitating the storage, the retrieval and the reconstruction of each item of information, and allowing the person to manage and control his or her identities and the data associated thereto. The individual can thus control the presentation he or she carries out of himself or herself (self-presentation), therefore defining the " digital image " (the image we transmit when we interact with other users in the digital environment) he or she wants to give of himself or herself, determining the facet of his or her personality that he or she wants to show, while at the same time he or she also controls the information exchanged in that process of social interaction.

Insofar as the tool and method adapt to, learn from and evolve with the person, being increasingly aware of his or her social reality, they become a reflection of the individual himself or herself. The knowledge of the different identities or facets of the personality that the person presents on the Network can provide data about oneself, which undoubtedly aids in knowing ourselves better. Therefore, self-knowledge is generated thanks to the present invention.

The possibilities of preparing the information about oneself offered by the tool to the person allow carrying out a process of personal growth. This process can be used in different ways, for example by preparing a digital diary or configuring and uploading the personal blog (or part of it) to the Network. As the tool provides the user with information about himself or herself, it offers feedback regarding: strategies for dealing with problems, self-help protocols, psychological alert indicators; access to psychological advice, which allows improving and treating certain pathologies by means of corrective guidelines. Self-knowledge can not only improve the psychological well-being of the user, but can also enhance his or her social skills. This scope of application is enriched with specific applications, such as; techniques for solving problems that arise in family, work interaction contexts, etc., strategies not only to control but to improve our "digital image". The tool therefore provides the user with techniques for controlling this aspect of his or her personal image, which progressively becomes more important.

The tool, since it knows the tastes, preferences, interests, needs, context, mood and available time of the person at all times, furthermore becomes a personal assistant which can: select, filter, arrange, prioritize and manage all the articles and news of the day from the favorite newspapers; filter telephone calls or e-mails; recommend theater plays, films or television programs; warn about concerts of a favorite group or singer or the launch on the market of a new record.

It can also monitor and compile data about oneself (vital signs, life habits, cardiovascular information, etc.) for the purpose of preventing diseases. To that end, it can contrast the complied information with the personal data, such that it can predict future health problems and advise about how to prevent them. In the event that the individual suffers from diseases, it can aid him or her, warning him or her when he or she must take the medication, reminding him or her of the visit to the doctor, etc. For people with high allergy levels, it can want of the start of vaccination campaigns, of the state of the surrounding environment, or substitute the warning plaques in case of accident of allergies to medicines.

In relation to the home, the tool allows physical access to the home, the automatic control and adjustment of household appliances (video, audio, light, etc.) according to the preferences of the person, such that when, for example, it detects that the person is in the bath, it sets the water temperature and plays his or her favorite music.

For the purpose of facilitating the location of specific people, the tool warns the user when the colleague he or she was waiting for reaches the office or when his or her friend logs on to a chat site. Thanks to the knowledge that the tool has of the person, through the communication with other "Digital Me's", it can aid him or her to find other similar people, with common interests or with a high compatibility level, according to the personalities of each individual, with which he can strike up a friendship or go even further.

In view of this description and set of drawings, the person skilled in the art can understand that the invention has been described according to several preferred embodiments thereof, but multiple variations can be introduced without departing from the object of the invention as it has been claimed.

## Claims

**1.** A method for managing information relating to a person, comprising:
- a stage of storing at least one item, wherein said stage of storing comprises in turn the following step:
- selecting an item which is to be saved;
**characterized by** the additional steps of:
- assigning to said item one or several identifying markers, wherein said markers are based on the human mind operation model;
- saving said item together with its marker or markers;
- obtaining a key associated to the item to subsequently retrieve said item.

**2.** A method according to claim 1, wherein the stage of storing further comprises the step of:
- indexing the item from said key.

**3.** A method according to any of the previous claims, further comprising:
- a stage of searching for information, wherein said stage of searching for information comprises in turn the following steps:
- defining at least one filter of the information which is to be sought;
- performing a search based on said information filter;
- obtaining at least one item as a result of the search.

**4.** A method according to claim 3, wherein said at least one item obtained as a result of the search is obtained from the key that said item has associated thereto.

**5.** A method according to any of the previous claims, wherein said items are chosen from the group consisting of: text, audio, video and any combination thereof.

**6.** A method according to any of the previous claims, wherein the different stages are carried out by managing agents (60) and specialist agents (70).

**7.** A method according to any of the previous claims, wherein each identifying marker is one of the following types: biographical, emotional, security or social markers.

**8.** A device for managing information relating to a person, comprising:
- means for storing at least one item, which means in turn comprise:
- means for selecting an item which is to be saved;
**characterized by**:
- means for assigning to said item one or several identifying markers, wherein said markers are based on the human mind operation model;
- means for saving said item together with its marker or markers;
- means for obtaining a key associated to the item to subsequently retrieve said item.

**9.** A computer program comprising program code means adapted to carry out the stages of the method of claims 1 to 7, when said program is run in a microcontroller, in a digital signal processor or in a computer information network.
